# EUROPEAN PATENT APPLICATION

(11) **EP 1 752 859 A2**
(43) Date of publication of application: **14.02.2007**
(21) Application number: 06016416.7
(22) Date of filing: 07.08.2006
(51) Int. Cl.: G06F 1/16

(54) **Portable electronic device**

(30) Priority: 08.08.2005 CN 200510089660
(71) Applicant: BENQ CORPORATION, Gueishan, Taoyung 333 Taiwan (CN)
(72) Inventor: Chen, Hsiao-Wu, Pingjhen City Taoyuan County 324 (TW)
(74) Representative: KEIL & SCHAAFHAUSEN Patentanwälte

(57) **Abstract**

A portable electronic device is disclosed. The portable electronic device includes a body, a button and a battery. The body includes a printed circuit board, a switch and a processor. The switch and the processor are disposed on the printed circuit board and electrically connected to each other. The button is movably disposed between a first position and a second position in relation to the body. The battery is detachably disposed on the body. The battery engages with the body when the button is in the first position. When the button moves to the second position to release the battery, the switch is actuated, sending a signal to the processor.

## Description

### BACKGROUND

The invention relates to a portable electronic device.

In recent years, portable electronic devices, such as cellular phones have become widely popular. Conventional cellular phones require power shutdown before removal or replacement of battery. However, if the battery separates from the body before full shutdown, current data processed therein may be lost.

### SUMMARY

Accordingly, the invention provides a portable electronic device comprising a body, a button and a battery. The body comprises a printed circuit board, a switch and a processor. The switch and the processor are disposed on the printed circuit board and electrically connected to each other. The button is movably disposed between a first position and a second position in relation to the body. The battery is detachably disposed on the body. The battery engages with the body when the button is in the first position. When the button moves to the second position to release the battery, the switch is actuated, sending a signal to the processor.

The processor receives the signal and shuts down a power to the portable electronic device.

The processor receives the signal and saves current data in the portable electronic device.

A moving direction of the button is perpendicular to the printed circuit board.

The portable electronic device further comprises a sliding block. The button comprises a first slope. When the button moves from the first position to the second position along a first direction, the first slope of the button abuts the sliding block moving from a third position to a fourth position along a second direction. The first direction is perpendicular to the second direction.

The sliding block comprises a first corresponding slope. The first slope of the button abuts the first corresponding slope of the sliding block to move the sliding block from the third position to the fourth position.

The sliding block comprises a second slope. When received in the body, the battery abuts the second slope of the sliding block to move the sliding block along the second direction.

The battery comprises a second corresponding slope abutting the second slope of the sliding block to move the sliding block along the second direction.

The fourth position is farther from the battery than the third position.

The body further comprises a shield comprising a receiving portion. When placed in the third position, the sliding block engages the battery so that the battery is fixed in the receiving portion.

The printed circuit board, the switch and the processor are disposed in the shield.

The portable electronic device further comprises a first resilient member abutting the shield and the button, providing a first resilient force on the button so that the button moves from the second position to the first position.

The first resilient member can be a spring.

The portable electronic device further comprises a second resilient member abutting the shield and the sliding block. When the button moves from the second position to the first position, the second resilient member provides a second resilient force on the sliding block so that the sliding block moves from the fourth position to the third position.

The second resilient member and the sliding block are integrally formed.

The second resilient member comprises a cantilevered profile.

The shield further comprises a first opening through which the button movably passes.

The sliding block comprises a second opening through which the button movably passes.

The shield further comprises a third opening through which the sliding block movably passes.

The body comprises an upper shield and a lower shield. The upper and lower shields cover the printed circuit board, the switch and the processor. The button and the battery are disposed on the lower shield.

A detailed description is given in the following embodiments with reference to the accompanying drawings.

### DESCRIPTION OF THE DRAWINGS

The invention can be more fully understood by reading the subsequent detailed description in conjunction with the examples and references made to the accompanying drawings, wherein:
- FIG. 1A: is an exploded view of a portable electronic device of the invention;
- FIG. 1B: is a partial schematic view of a portable electronic device of the invention;
- FIG. 2A: is a schematic view of a button of a portable electronic device of the invention;
- FIG. 2B: is a schematic view of a button of a portable electronic device of the invention;
- FIG. 3: is a schematic view of a sliding block of a portable electronic device of the invention;
- FIG.4A: is a partial sectional view of a portable electronic device of the invention; and
- FIG. 4B: is a partial sectional view of a portable electronic device of the invention.

### DETAILED DESCRIPTION

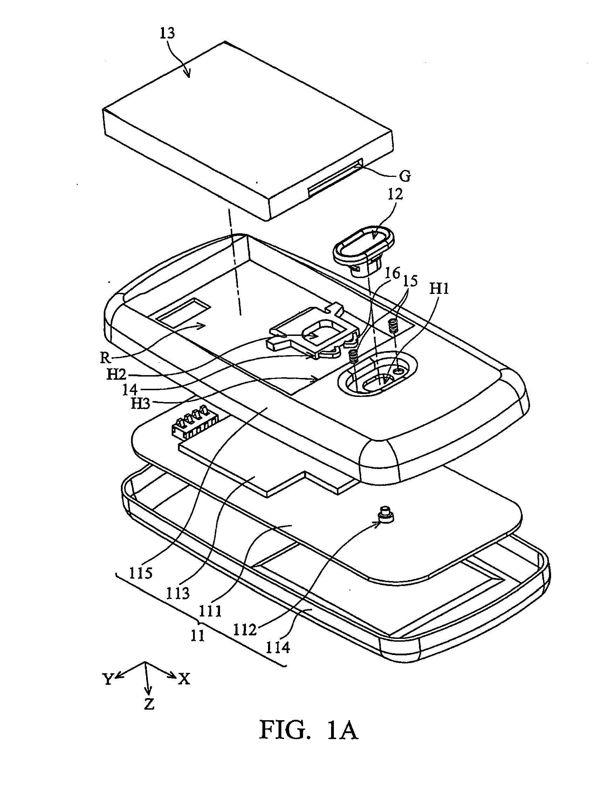

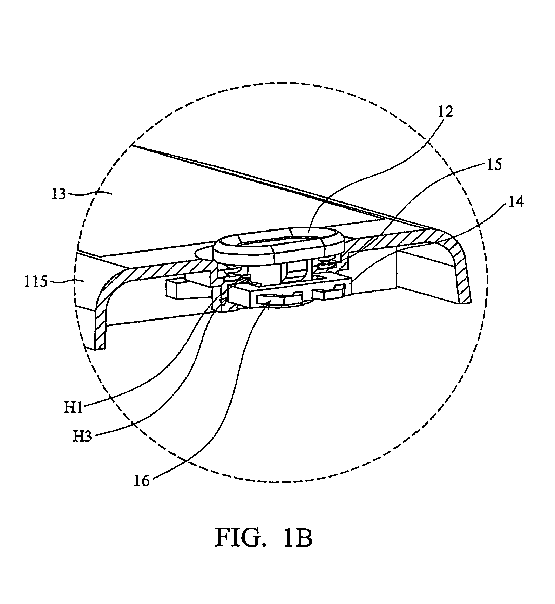

FIG. 1 depicts an exploded view of a portable electronic device of the invention. The portable electronic device comprises a body 11, a button 12, a battery 13, a sliding block 14, a first resilient member 15 and a second resilient member 16. The body 11 comprises a printed circuit board 111, a switch 112, a processor 13, and a shield. The switch 112 and the processor 113 are disposed on the printed circuit board 111 and electrically connected to each other. The shield comprises an upper shield 114 and a lower shield 115, covering all the elements. The lower shield 115 comprises a receiving portion R, and the battery 13 is detachably disposed in the receiving portion R. The lower shield 115 of the shield further comprises a first opening H1, and the button 12 movably passes through the first opening H1 and is disposed on the lower shield 115. The button 12 is movable between a first position S1 and a second position S2 along Z axis in relation to the body 11. The lower shield 115 of the shield further comprises a third opening H3, and the sliding block 14 passes movably through the third opening H3 and is disposed under the button 12. Furthermore, the sliding block 14 comprises a second opening H2. The button 12 passes through the first opening H1 and then into the second opening H2.

FIG. 1B depicts partial elements of the assembled portable electronic device of the invention. In FIG. 1B, the first resilient member 15 is disposed between the button 12 and the lower shield 15, providing the button 12 with a first resilient force along Z axis. The second resilient member 16 is disposed between the sliding block 14 and the lower shield 115, providing the sliding block 14 with a second resilient force along X axis. The first resilient member 15 can be, for example, a spring.

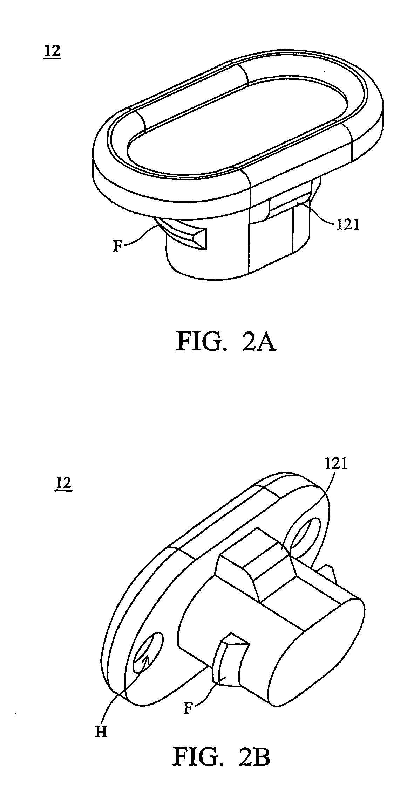

FIGS. 2A and 2B depict the button 12 of the portable electronic device of the invention. As shown in FIG. 2A, the front of button 12 comprises a first slope 121, such as a curved slope. Two sides of the button 12 comprise two fixing portions F to connect to the lower shield 115. As shown in FIG. 2B, two holes H are formed on the button 12 to abut the first resilient member 15.

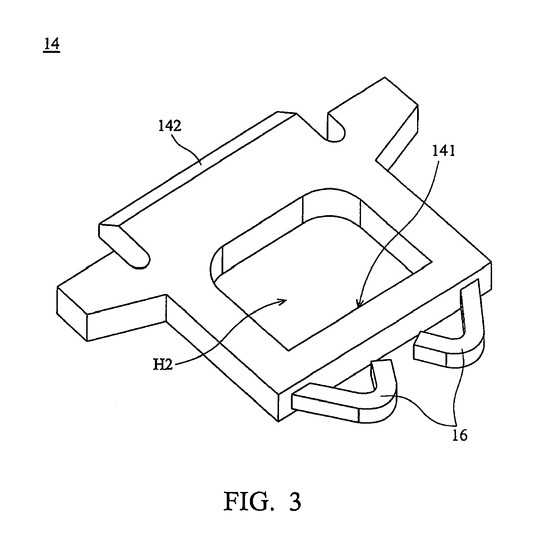

FIG. 3 depicts the sliding block 14 of the portable electronic device of the invention. As shown in FIG. 3, a first corresponding slope 141 is formed at the periphery of the second opening H2 of the sliding block 14. A second corresponding slope 142 is formed at a side of the sliding block 14, and the second resilient member 16 is disposed at an opposite side of the sliding block 14. The second resilient member 16 has, for example, a cantilevered profile. Otherwise, the second resilient member 16 and the sliding block 14 are integrally formed.

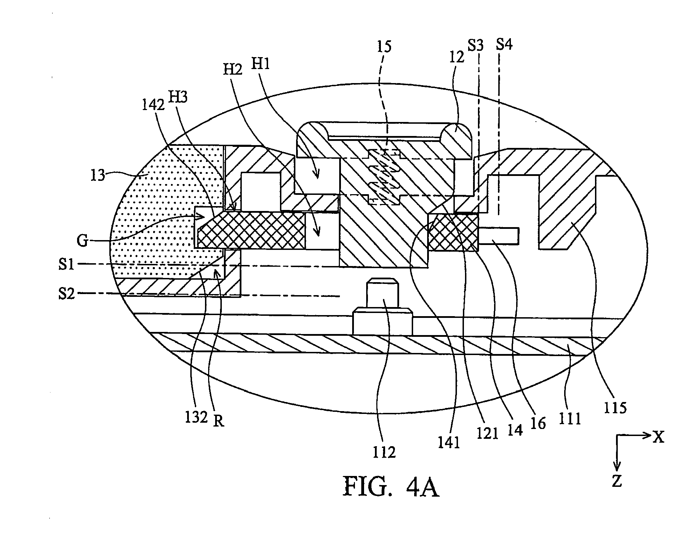

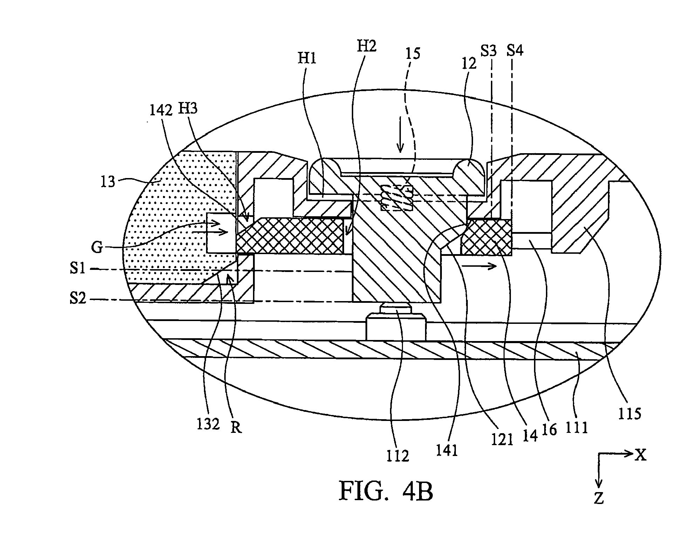

FIGs. 4A and 4B depict sectional views of partial elements of the portable electronic device of the invention. In FIG. 4A, the printed circuit board 111 of the body 11 is parallel to X axis. The battery 13 is received in the receiving portion R of the lower shield 115. A groove G of the battery 13 engages the sliding block 14. In this state, the button 12 is in the first position S1, and the sliding block 14 is in the third position S3.

When the battery 13 is received in the receiving portion R, the second corresponding slope 132 of the battery 13 abuts the second slope 142 of the sliding block 14, so that the sliding block 14 moves rightward along X axis (the second direction). Before the battery 13 is received in the receiving portion R, the sliding block 14, moving leftward along X axis, returns to the third position S3, and engages the groove G of the battery 13. In the above process, the button 12 is not moved.

Referring to FIG. 4B, when the button 12 is pushed along Z axis (the first direction) to move the button 12 from the first position S1 to the second position S2, the button 12 actuates the switch 112. The switch 112 sends a signal to the processor 113 immediately, so that the processor 113 saves current data, shuts down power to the portable electronic device, or performs other required actions.

In the above state, the first slope 121 of the button 12 abuts the first corresponding slope 141 of the sliding block 14, moving the sliding block 14 rightward along X axis to the fourth position S4, so that the second resilient member 16 abuts the lower shield 115. As the sliding block 14 is in the fourth position S4, the sliding block 14 separates from the groove G of the battery 13 so that the battery 13 is released from the body 11. Additionally, the fourth position S4 is farther from the battery 13 than the third position S3.

After the battery 13 separates from the body 11, the force on the button 12 is released. The first resilient member 15 abutting the button 12 and the lower shield 115 provides a first resilient force on the button 12 so that the button 12 moves from the second position S2 return to the first position S1. The second resilient member 16 abutting the sliding block 14 and the lower shield 115 provides a second resilient force on the sliding block 14 so that the sliding block 14 moves back from the fourth position S4 to the third position S3.

The portable electronic device of the invention saves current data, shuts down power to the portable electronic device, or performs other actions immediately even if power is not correctly shutdown and the battery 13 is separated from the body 11 unintentionally. The portable electronic device of the invention prevents data loss, protects the elements therein and increases life span thereof.

While the invention has been described by way of example and in terms of preferred embodiment, it is to be understood that the invention is not limited thereto. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A portable electronic device, comprising:
a body comprising a printed circuit board, a switch and a processor, wherein the switch and the processor are disposed on the printed circuit board and electrically connected to each other;
a button movably disposed between a first position and a second position in relation to the body; and
a battery detachably disposed on the body, wherein the battery engages with the body when the button is in the first position, and when the button moves to the second position to release the battery, the switch is actuated, sending a signal to the processor.

2. The portable electronic device as claimed in claim 1, wherein the processor receives the signal and shuts down a power to the portable electronic device.

3. The portable electronic device as claimed in claim 1 and/or 2, wherein the processor receives the signal and saves a current data in the portable electronic device.

4. The portable electronic device as claimed in one or more of claims 1 to 3, wherein a moving direction of the button is perpendicular to the printed circuit board.

5. The portable electronic device as claimed in one or more of claims 1 to 4, further comprising a sliding block, wherein the button comprises a first slope; when the button moves from the first position to the second position along a first direction, the first slope of the button abuts the sliding block, moving the sliding block from a third position to a fourth position along a second direction, and the first direction is perpendicular to the second direction.

6. The portable electronic device as claimed in claim 5, wherein the sliding block comprises a first corresponding slope, the first slope of the button abuts the first corresponding slope of the sliding block to move the sliding block from the third position to the fourth position.

7. The portable electronic device as claimed in claim 5 and/or 6, wherein the sliding block comprises a second slope, and the battery, when received in the body, abuts the second slope of the sliding block to move the sliding block along the second direction.

8. The portable electronic device as claimed in claim 7, wherein the battery comprises a second corresponding slope abutting the second slope of the sliding block to move the sliding block along the second direction.

9. The portable electronic device as claimed in claim 5, wherein the fourth position is farther from the battery than the third position.

10. The portable electronic device as claimed in one or more of claims 5 to 9, wherein the body further comprises a shield comprising a receiving portion, by which, when placed in the third position, the sliding block engages the battery, so that the battery is fixed in the receiving portion.

11. The portable electronic device as claimed in claim 10, wherein the printed circuit board, the switch, and the processor are disposed in the shield.

12. The portable electronic device as claimed in claim 10 and/or 11, further comprising a first resilient member abutting the shield and the button, providing a first resilient force on the button so that the button moves from the second position to the first position.

13. The portable electronic device as claimed in claim 12, wherein the first resilient member is a spring.

14. The portable electronic device as claimed in claim 12 and/or 13, further comprising a second resilient member abutting the shield and the sliding block, wherein when the button moves from the second position to the first position, the second resilient member provides a second resilient force on the sliding block so that the sliding block moves from the fourth position to the third position.

15. The portable electronic device as claimed in claim 14, wherein the second resilient member and the sliding block are integrally formed.

16. The portable electronic device as claimed in claim 14 and/or 15, wherein the second resilient member has a cantilevered profile.

17. The portable electronic device as claimed in one or more of claims 10 to 16, wherein the shield further comprises a first opening through which the button movably passes.

18. The portable electronic device as claimed in one or more of claims 10 to 17, wherein the sliding block comprises a second opening through which the button movably passes.

19. The portable electronic device as claimed in one or more of claims 10 to 18, wherein the shield further comprises a third opening through which the sliding block movably passes.

20. The portable electronic device as claimed in one or more of the preceding claims, wherein the body comprises an upper shield and a lower shield, the printed circuit board, the switch, and the processor are covered by the upper and lower shields, and the button and the battery are disposed on the lower shield.
